# FASCICULE DE BREVET EUROPEEN

(11) **EP 3 083 336 B1**
(45) Date de publication et mention de la délivrance du brevet: **24.02.2021**
(21) Numéro de dépôt: 14795979.5
(22) Date de dépôt: 27.10.2014
(51) Int. Cl.: B60R 11/02

(54) **SUPPORT D'ATTACHE D'UN APPAREIL PORTABLE À UN RÉTROVISEUR DE VÉHICULE**
HALTERUNG FÜR EINE TRAGBARE EINHEIT FIXIERT AM EINEN FAHRZEUGSPIEGEL
SUPPORT FOR PORTABLE UNIT FIXED TO A VEHICLE MIRROR

(30) Priorité: 03.12.2013 FR 1302810
(43) Date de publication de la demande: 26.10.2016
(73) Titulaire: Jodon De Villeroche, Gérard Alain Jacques Marie, 14350 Le Désert (FR)
(72) Inventeur: Jodon De Villeroche, Gérard Alain Jacques Marie, 14350 Le Désert (FR)
(86) Numéro de dépôt international: PCT/EP2014/072992
(87) Numéro de publication internationale: WO 2015/082132

(56) Documents cités:
- FR-A1- 2 963 297
- US-B1- 6 418 010

## Description

La présente invention concerne un support d'attache au rétroviseur intérieur d'un véhicule, d'un appareil portatif de communication ou de localisation pourvu d'un écran d'affichage et de commandes de fonctionnement tel qu'un téléphone cellulaire dit portable ou un appareil d'assistance à la conduite d'un véhicule dit GPS, et de dispositifs généralement électroniques ou électriques utilisables par le conducteur, énumérés ci-après.

### ARRIERE PLAN DE L'INVENTION

Il existe des attaches de ce type d'appareil (dits "portables", téléphones MOBILES ou GPS au pare brise ou au tableau de bord par des systèmes à ventouse ou par accrochage sur les aérateurs , ou par accrochage au rétroviseur.

Il a été proposé d'autres supports de fixation de ces portables au rétroviseur intérieur d'un véhicule automobile. Ces supports présentent plusieurs inconvénients.

Une grande partie de ces supports utilisent une ventouse accolée au pare brise ou au tableau de bord. Ils ont l'inconvénient pour les premiers de se détacher avec un changement d'humidité ou de température dans le véhicule.

L'accrochage aux aérateurs a l'inconvénient de ne pas être facilement standardisable.

Les plus connus de ces supports à ventouse ou aux aérateurs portent un non commercial tel que RICHTER ® HR ®, HAMA®, TOMTOM®, GARMIN ®.

Le brevet FR 2 963 297 A1 divulgue un support d'attache selon le préambule de la revendication 1.

Existe un brevet anglais No GB 2501330 « Hands free cradle for smart phone, PDA, satellite navigation device » qui utilise aussi une ventouse.

Il existe aussi un support de fixation, promu par la société de diffusion commerciale PEARL, en deux parties l'une équipée de moyens d'attache au rétroviseur par une mâchoire fixée sur le côté du rétroviseur, réglable suivant la largeur du rétroviseur, l'autre à l'extrémité d'un « tuyau de douche », relativement dur mais déformable pour sertir à son extrémité un mobile ou un appareil GPS. L'inconvénient de ce dispositif dont les mâchoires sont parallèles, est que les rétroviseurs peuvent avoir des bords inférieurs et supérieur non parallèles, ou bombés, si bien que le serrage des mâchoires n'est pas stable. Un autre inconvénient est que ces mâchoires ne peuvent être serrées que sur le côté gauche ou droit du rétroviseur et non en son milieu, si bien que le « tuyau de douche » doit être orienté pour faire contre poids et que toute action qui est appliquée manuellement sur le mobile ou sur le GPS, etc., déséquilibre le rétroviseur par le sertissage des mâchoires sur le côté. Le mobile ou le GPS fixé à l'extrémité du « tuyau de douche » présente un autre inconvénient d'être arrimé relativement solidement, si bien qu'en cas de choc, ce « tuyau de douche » résiste et peut blesser.

### OBJET DE L'INVENTION

La présente invention entend remédier à ces inconvénients et permettre une fixation du support, en matière plastique avec un bon coefficient de solidité, à tout type de rétroviseur, et des moyens de maintien de Mobiles ou de GPS et bien d'autres appareils de toutes dimensions, ainsi qu'à la tenue, derrière et contre le téléphone ou le GPS, etc. d'une batterie solaire ou d'un chargeur, ou batterie à contact, l'espace requis pour ces éléments, téléphone ou GPS et batterie, étant prévu dans la largeur de semelles à rebord, ou casquettes haute et basse, du support d'attache de téléphone et de GPS, de sorte à ne plus lier le fonctionnement électrique de ces dispositifs à un cordon d'alimentation généralement alimenté sur l'allume cigare.
A cet effet, l'invention a pour objet un support pour appareil portatif, écran d'affichage ou autres dispositifs énumérés ci-dessous, comportant une première extrémité pourvue d'un premier moyen pour sa fixation à un rétroviseur intérieur de véhicule et une seconde extrémité pourvue d'un second moyen pour recevoir et maintenir lesdits appareils et les dits dispositifs de communication ou de localisation tels que le téléphone portable et le GPS, et des dispositifs généralement électroniques ou électriques, utilisables par le conducteur, énumérés ci-après qu'il soient orientés vers le conducteur ou vers le pare brise: de PDA, de radar, de kit mains libres, de rétrovision contre l'angle mort, de paiement, de Webcam ®, de WIFI®, de RFID® ,de support ou lecteur de carte à mémoire avec ou sans processeur, de compteur d'auto-partage, de boîtier de logiciels de taxes de carburant par exemple poids lourds, de terminal de logiciels de gestion de flottes, de Blue Tooth®, de MP3®, d'ordinateur, de tablette, de boîte noire, de boîte de maintenance du véhicule, de compteur de taxi, de caméra, de visualiseur d'images ou vidéo, de système hologramme, d'aide au parking, de recherche de parking, de radar et écran de recul, d'information horaire de stationnement, de stationnement automatique, de projection sur pare brise, d'émetteur récepteur de télé-péage, d'émetteur récepteur anti-collision, de radio émetteur et récepteur, de vision nocturne, de rétro-vision des sièges arrières, de télévision, de surveillance d'endormissement du conducteur, de support d'antennes, d'émetteur de fermeture-ouverture de porte de garage, d'émetteur récepteur laser, de batterie ou chargeur, de lampe signalétique, de cocarde ou de projecteur, etc.

Selon un premier aspect de l'invention, le premier moyen comporte une semelle à rebord ou casquette pour être appliquée contre le bord inférieur du rétroviseur et un organe d'accrochage conformé pour coopérer avec une autre partie du rétroviseur et dont la distance par rapport à la semelle ou casquette est réglable par au moins un ressort dans une direction perpendiculaire à cette dernière pour assurer, après montage, un contact permanent et fort de la semelle ou casquette avec le bord inférieur du rétroviseur.

Avantageusement, l'invention peut prendre quatre autres variantes de réalisation qui lui permettent d'être adaptable sur la totalité des rétroviseurs présents sur le marché.

Dans la première réalisation, l'organe d'accrochage est un arceau plan disposé autour de l'axe du rétroviseur au pare brise dont chaque extrémité forme une jambe qui constitue une coulisse coopérant avec deux glissières ou puits du support perpendiculaire à la semelle. L'immobilisation des jambes dans les glissières ou puits est provoquée par le serrage de la vis 27 du cavalier de blocage 26, avec ses deux extrémités 26a et 26 b à picots. Les parties plates de ces jambes sont grainées avec des picots, de sorte à ce que les 2 extrémités du cavalier aussi grainées, pénétrant la plaque 17, immobilisent bien par leur serrage les dites jambes. Cette réalisation a l'avantage d'être simple pour servir des rétroviseurs présentant un axe d'attache au rétroviseur dégagé.

Dans la deuxième, la troisième, et la quatrième réalisation on applique la même disposition des jambes qui constituent une coulisse coopérant avec deux glissières ou puits du support 17 perpendiculaire à la semelle. L'immobilisation des jambes dans les glissières ou puits étant provoquée par le serrage de la vis 27 du cavalier de blocage 26 avec ses deux extrémités 26a et 26 b à picots. Les parties plates des jambes sont grainées avec des picots, de sorte à ce que les 2 extrémités du cavalier aussi grainées, pénétrant la plaque 17 par des trous (non représentés), placés dans le milieu des glissières ou puits immobilisent bien par leur serrage les dites jambes enserrés dans les glissières ou picots.

Dans la deuxième réalisation, particulièrement, l'arceau, ne sert pas à s'accrocher à l'axe de rotule du rétroviseur qu'il contourne, mais à servir de crochet sur le rebord haut du rétroviseur ; ainsi il comporte un angle en forme de L dans sa partie supérieure et dispose d'un crochet sur le haut du rétroviseur faisant face à la semelle basse ou casquette pour coopérer avec le bord inférieur du rétroviseur. On conçoit plusieurs dimensions des arceaux dans leur partie faisant crochets sur le bord du rétroviseur, de sorte à s'adapter à tout rétroviseur. Cette réalisation à l'avantage d'être simple pour servir un ensemble de rétroviseurs à la condition de ce que il existe plusieurs petites branches de dimension différente à crochets pour s'adapter à cet ensemble de rétroviseurs.

Dans la troisième réalisation, particulièrement, l'organe d'accrochage est formé par un jeu de deux crochets distincts en forme de L dont la plus grande jambe forme ladite coulisse coopérant avec les glissières ou puits et dont la plus courte fait face à la semelle basse pour coopérer avec le bord supérieur du rétroviseur. Cette réalisation à l'avantage de s'adapter à tous les rétroviseurs existants dans la mesure où l'on détient dans un jeu, plusieurs crochets dont la petite branche horizontale à crochets varie en fonction de l'épaisseur du rétroviseur. Les pieds des grandes jambes sont munis de picots, afin que le cavalier qui les serre dans le puits les immobilise par contrainte.

Dans la quatrième réalisation, particulièrement, l'organe d'accrochage est formé d'un jeu de deux crochets semblables en forme de L dont la plus grande jambe forme ladite coulisse coopérant avec les glissières ou puits et dont la longueur tant de la partie horizontale sur le haut du rétroviseur que de la partie verticale dans le dos du rétroviseur est constituée de maillons successifs à charnière, les liant les uns aux autres, comme sont constitués des bracelets généralement métalliques des montres vendues dans le commerce, à la différence près que si la présente invention du support d'attache d'un appareil portable à un rétroviseur de véhicule est en plastique, ces maillons sont également en plastique, d'un coefficient de solidité éventuellement différent, ceux-ci étant reliés par des axes horizontaux enfilés dans les charnons latéraux et du milieu de chacun des maillons, le premier maillon étant en forme de crochet sur le rebord haut du rétroviseur, un certain nombre de maillons formant le petit côté du L du crochet à l'horizontal contre le bord haut du rétroviseur (R), un certain nombre de maillons, un ou deux en général, formant le tournant de l'angle formé par les côtés horizontaux et verticaux du rétroviseur (R), les autres maillons descendant verticalement le long de l'arrière du rétroviseur pour se terminer avec le dernier maillon en étant relié par un axe horizontal ou d'une autre façon par exemple par un crochet ou une vis, à la partie verticale d'une jambe semi-longue, de nature semblable aux jambes décrites précédemment, en proportion du périmètre côté haut horizontal du rétroviseur plus côté vertical du rétroviseur ,cette jambe entrant dans les puits ou glissières constituées dans le premier moyen, perpendiculaires à la semelle. L'avantage de cette réalisation est que l'ensemble constitué par les maillons, dont le nombre est variable par montage, épouse très exactement la forme horizontale du haut rétroviseur, son arrondi vers le côté arrière du rétroviseur, et la forme arrière du rétroviseur souvent bombée. Le principe de serrage des pieds des crochets à maillons entrant dans les puits étant exactement le même, soit par un serrage de la vis du cavalier, contraignant les extrémités du cavalier sur les picots de ces pieds. La mobilité des maillons entre eux et leur nombre permettent de s'adapter à toute forme de rétroviseur. Préférence est donnée à des maillons de dimensions semblables à ceux des bracelets de montre. Ceux de l'invention sont en plastique. Ils pourraient être en caoutchouc. Le présent brevet étend le concept de ce deuxième aspect par la substitution de l'ensemble des maillons par un élément unique d'une bande de caoutchouc partant du crochet au devant du rétroviseur jusqu'au puits. Les maillons peuvent être reliés par différents types de goupilles de type goupilles coniques, sprint pins, K locking pins, etc.

Selon un deuxième aspect de l'invention, le support comporte deux parties, l'une portant le premier moyen et l'autre le second moyen, ces parties étant mobiles l'une par rapport à l'autre grâce à une zone de liaison déformable qui permet, lorsque le support est fixé au rétroviseur, un débattement de la seconde partie par rapport à la première.

Cette liaison déformable permet de modifier la position de l'appareil portable ou le GPS ou les dispositifs énumérés ci-dessus par rapport au rétroviseur pour par exemple d'une part, escamoter cet appareil portable, le Mobile ou le GPS ou les dispositifs énumérés ci-dessus pour dégager une cavité inférieure dans la partie basse du premier moyen de fixation au rétroviseur afin de rendre accessible le bouton jour/nuit des rétroviseurs. D'autre part l'intérêt de la modification de la position des dits dispositifs permet d'éviter en cas de choc lors d'un accident, le portable ou le GPS ou les dits dispositifs énumérés ci-dessus, insérés dans le second moyen, sans qu'ils échappent à leur support parce que solidement arrimés pour recevoir et maintenir les dits appareils et dits dispositifs.

En ce qui concerne cet aspect du support, une première réalisation de la zone déformable de liaison est sous forme d'une articulation freinée sous le rétroviseur. Cette articulation peut être à axe sensiblement horizontal étant à charnière ou à rotule. Dans une seconde réalisation, la zone déformable de liaison est formée d'un matériau à déformation aluminium ou plastique. Une troisième réalisation comporte une rotule intégrée au corps du rétroviseur (29)effectuant la liaison entre le rétroviseur et l'extrémité pourvue d'un second moyen (2) pour recevoir et maintenir lesdits appareils et les dits dispositifs de communication ou de localisation en dessous du rétroviseur tels que le téléphone portable et le GPS, et des dispositifs généralement électroniques ou électriques, utilisables par le conducteur, énumérés ci-dessus.

D'autres caractéristiques de l'invention ressortiront de la description, donnée ci-après, d'exemples de sa réalisation.

### BREVE DESCRIPTION DES DESSINS

Il sera fait référence aux dessins annexés dans lesquels :

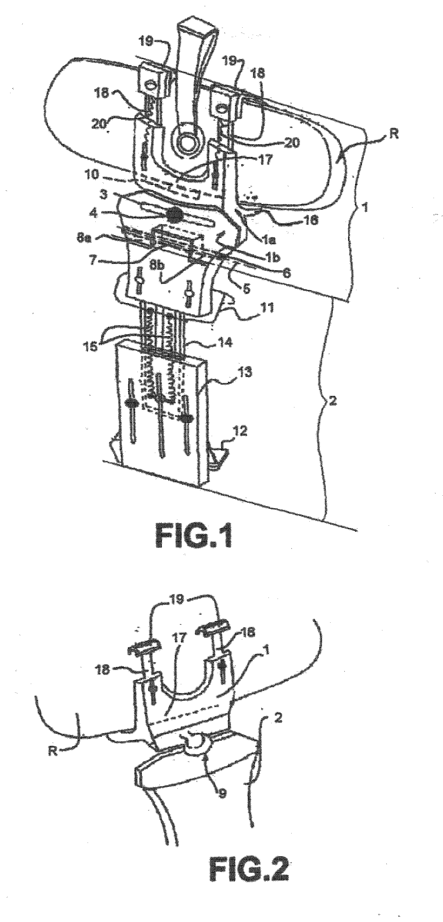

- la figure 1 illustre une vue schématique arrière du support selon l'invention associé à un rétroviseur intérieur de véhicule, une vue de ressorts de maintien des crochets sur le haut du rétroviseur, et une vue schématique de la lumière en oblong qui permet à la première extrémité pourvue d'un premier moyen pour sa fixation à un rétroviseur intérieur de véhicule de s'orienter par rapport à la seconde extrémité pourvue d'un second moyen pour recevoir et maintenir lesdits appareils, ainsi qu'un vue schématique des 3 charnons permettant de relier le premier moyen au deuxième moyen en permettant au deuxième moyen de pivoter vers l'arrière du premier moyen,
- la figure 2 illustre une vue schématique à rotule d'une variante de réalisation du support de la figure 1, en lieu et place des 3 charnons,

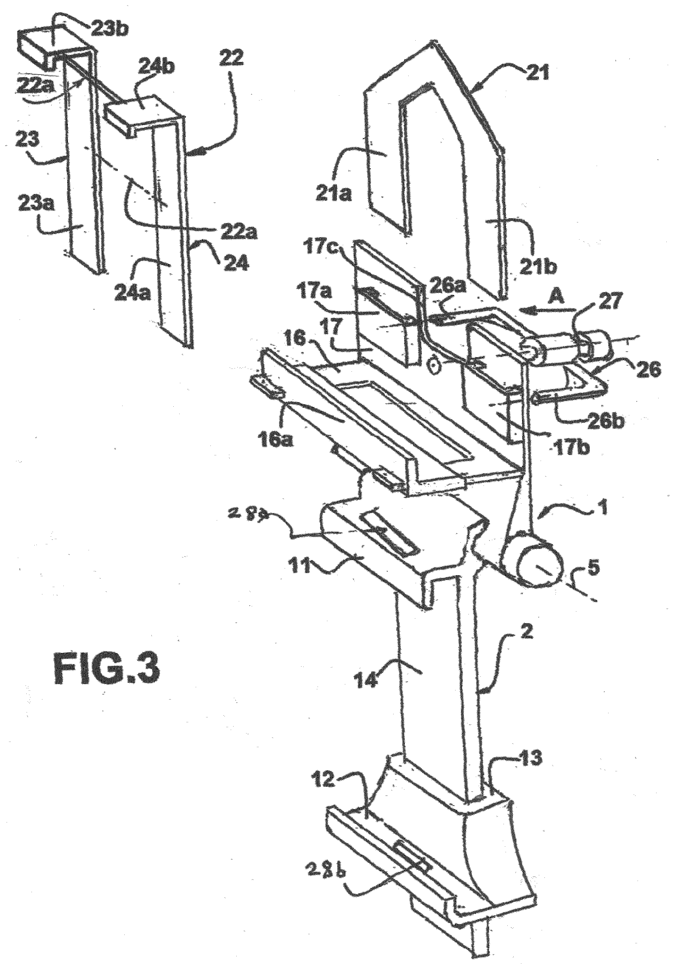

- la figure 3 illustre une vue schématique du premier aspect du support de l'invention, à savoir dans l'une de ses quatre variantes de réalisation des moyens de sa fixation au rétroviseur, par un arceau en U, s'accrochant sur l'axe de rotule d'attache au pare-brise, et une vue schématique des glissières ou puits, et du cavalier contraignant les jambes verticales des crochets d'attache au haut du rétroviseur, ou les jambes verticales des arceaux s'appuyant sur l'axe de rotule de l'attache du rétroviseur au pare-brise,

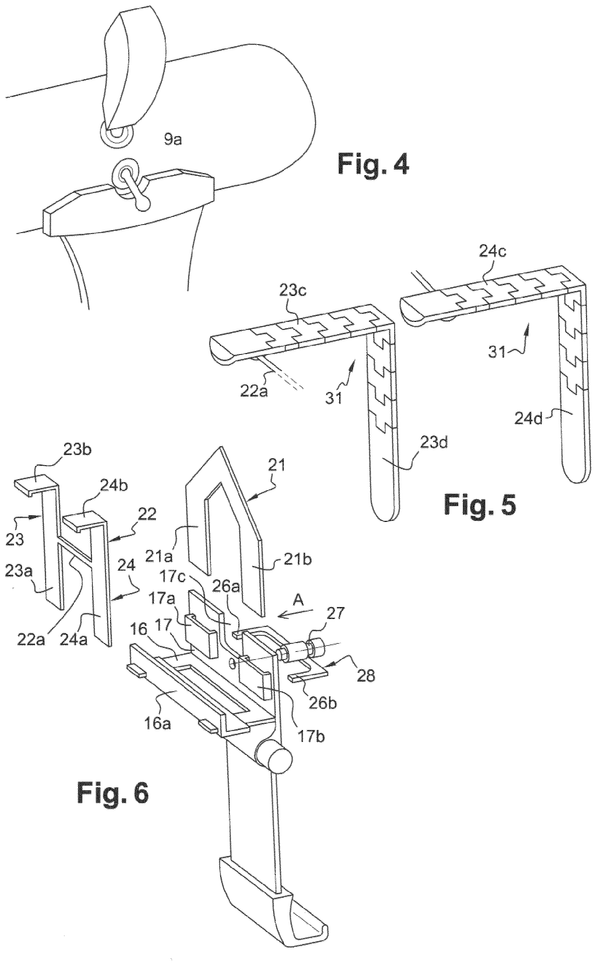

- la figure 4 illustre une vue schématique à rotule intégrée dans le rétroviseur,
- la figure 5 illustre une vue schématique de crochets constitués d'une partie souple faite de maillons successifs, reliés par des axes horizontaux enfilés dans les charnons latéraux et du milieu, le premier maillon étant en forme de crochet sur le rebord haut du rétroviseur, le dernier maillon étant accroché à la partie de la jambe de ce crochet composé de deux parties, une souple et une rigide, entrant dans les glissières ou puits, la mobilité des maillons entre eux permettant de s'adapter à toute forme de rétroviseur,
- la figure 6 illustre une vue schématique du premier moyen pour la fixation du rétroviseur, le support du mobile ou du GPS ou des dispositifs électroniques ou autres étant orientés dans la direction du pare brise,

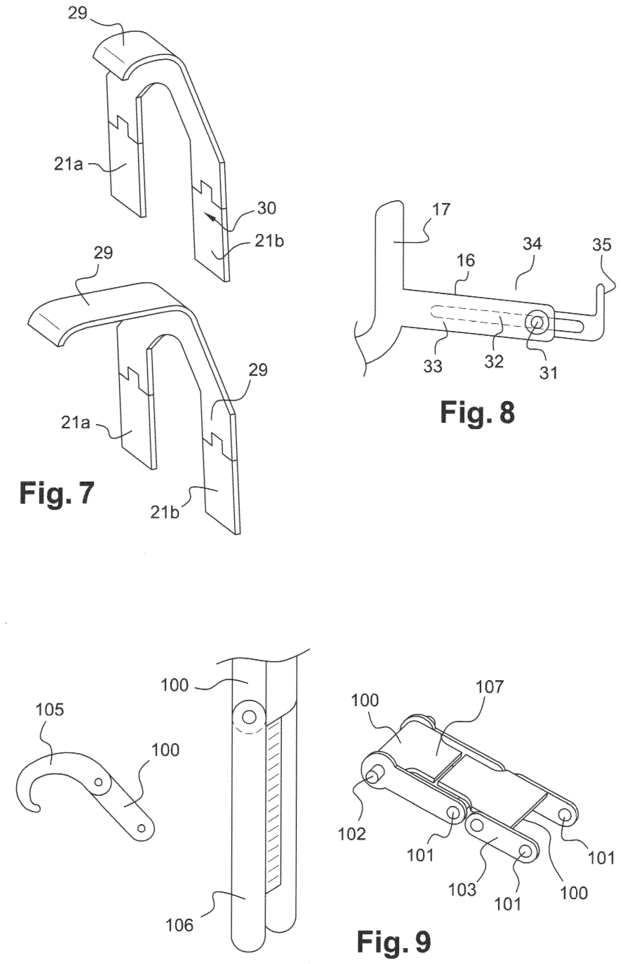

- la figure 7 illustre une vue schématique d'un arceau ou étrier en U comportant au moins un crochet pour s'adapter au haut du rétroviseur, ce crochet pouvant avoir sa partie perpendiculaire aux jambes, de différentes dimensions pour s'adapter à différentes épaisseurs de rétroviseurs, et une charnière sur chaque jambe,
- la figure 8 illustre une vue schématique de la semelle à rebord ou casquette, appliquée contre le bord inférieur du rétroviseur, comprenant une glissière retenant le bord bas du rétroviseur, positionnée par une vis et un bouton s'immobilisant dans un oblong de ladite glissière.

### DESCRIPTION DETAILLEE DE L'INVENTION

A la figure 1, le support selon l'invention est constitué par deux parties.

La première partie (1) comporte des moyens pour fixer au rétroviseur (R) du véhicule, moyens qui seront explicités plus en détail en regard de la Figure 3.

La deuxième partie (2) comporte des moyens pour recevoir et maintenir un appareil tel qu'un téléphone portable ou un dispositif d'aide à la navigation dit GPS, pourvus l'un comme l'autre d'un écran , de manière connue, ou les dispositifs généralement électroniques ou électriques énumérés ci-dessus, moyens qui seront explicités plus en détail qui seront explicités plus en détail en regard des Figures 1, 3, 5, 6, 7, et 8.

Les deux parties (1) et (2) sont indexables l'une par rapport à l'autre autour d'un axe sensiblement vertical lorsque le support est fixé au rétroviseur. Les moyens assurant cette indexation sont par exemple une lumière oblongue (3) ménagée dans l'élément (1) traversée par une vis (4)implantée dans l'élément (1). Les éléments (1) et (2) portent l'un sur l'autre par une surface cylindrique qui définit l'axe vertical susdit.

On peut ainsi orienter les écrans ou les dispositifs énumérés ci-dessus soit vers le conducteur, soit vers le passager du véhicule.

Selon l'invention, dans la représentation de la Figure 1, les deux parties (1) et (2) sont reliées entre elles par une articulation d'axe (5) sensiblement horizontale. Cette articulation possède une cheville (6) qui traverse un charnon (7) de l'élément (1) et deux charnons (8a et 8b) de la partie (2).

Cette articulation est freinée par tout moyen connu non représenté. Un moyen peut être un crantage entre les charnons, ceux-ci étant relativement compliants s'ils sont en matière plastique, ce qui permet une indexation des pièces (1) et (2) autour de l'axe (5) dans diverses positions discrètes. Une autre possibilité de freiner cette charnière consiste par exemple à prévoir la cheville (6) montée immobile en rotation dans le charnon (7) et des paliers en élastomère à l'intérieur des charnons (8a ou 8b. Un écrou à chaque extrémité filetée de la cheville (6) permet d'écraser chaque palier en le faisant gonfler radialement pour créer un frottement dosé. D'autres solutions à la portée de l'homme de métier peuvent être mises en œuvre.

L'articulation d'axe (5) permet aussi le retournement de la partie 2 en sens inverse, soit à 180 °, Fig. 6, c'est-à-dire vers le pare brise (au lieu de vers le conducteur), pour recevoir et maintenir les dispositifs énumérés plus haut, tel que un radar, un émetteur récepteur de télé-péage, un émetteur récepteur anti collision, un projecteur, etc. dans la direction du pare brise, ce qui constitue un 2^{ème} usage.

Ces mobilités entre le rétroviseur et l'appareil à écran et les dits dispositifs peuvent être, dans une variante de réalisation, assurées par une articulation à rotule (9) comme illustré par la figure 2, ou par le retournement à 180° des charnons (8a et 8b) illustré par la Figure 6 par rapport au charnon central (7). A cette Figure, on retrouve certains des éléments déjà décrits avec les mêmes références.

Le serrage de l'articulation est lui aussi assuré par tout moyen connu. On peut par exemple mettre en œuvre un ajustement de la rotule par force dans son logement, ou bien par une vis pointeau entre le boîtier de la rotule et la sphère accessible depuis l'extérieur. Il peut s'agir également d'une sorte de vis tangente qui, selon sa position freine plus ou moins la rotation de la sphère dans son logement.

Le mouvement possible entre les parties (1) et (2) du support selon l'invention aura une direction privilégiée vers le pare brise dans son 1^{er} usage de maintien des appareils mobiles ou GPS. Ainsi le conducteur pourra repousser la partie (2) vers ce pare-brise pour, par exemple, augmenter son champ de vision, la partie (2) le support, par exemple avec son écran d'appareil de navigation GPS, se logeant derrière le rétroviseur.

Ce mouvement a pour effet un dégagement (non représenté) qui permet également d'accéder au commutateur (10) jour/nuit du rétroviseur lorsqu'il existe. Le moyen (1) présente dans ce but une large échancrure ou espace d'accès au bouton jour/nuit.

Les dispositions d'articulation décrites ci-dessus ne sont pas exhaustives. Ce n'est pas sortir du cadre de l'invention que de prévoir un organe dans lequel les parties (1) et (2) soient reliées par un matériau tel que une tige d'aluminium ou à déformation plastique rendant l'articulation flexible qui puisse se couder et/ou se tordre sous l'effet d'un effort déterminé et conserver son état final tant qu'un autre effort ne lui impose pas une autre géométrie. De tels matériaux peuvent associer une ossature à géométrie variable associée à un composé organisant autour ou dans cette ossature un freinage de ses degrés de liberté.

De même, le dispositif de la rotule peut être conçu comme tournant librement sur 180 ° de sorte à se servir de la partie (2) pour maintenir un dispositif généralement électronique ou électrique susdit tel qu'un radar, un télépéage, un projecteur, etc. dans la direction que le véhicule suit.

La Figure 1 illustre une réalisation des parties (1) et (2) et du moyen que chacune d'elle comporte pour d'une part, coopérer avec le rétroviseur (R) et d'autre part recevoir et maintenir l'appareil amovible avec écran ou dispositif électronique ou électrique susdit.

Pour ce qui concerne le maintien de cet appareil, la partie (2) du support selon l'invention comporte deux semelles à rebord ou deux casquettes (11) et (12) en regard l'une de l'autre entre lesquelles l'appareil amovible ou susdit dispositif électronique ou électrique est inséré.

La casquette (11) appartient de manière fixe ou ajustable comme on le voit sur la Figure 1 à la pièce (2). La casquette (12) est portée par une plaque de support (13) qui est montée à coulissement sur des coulisses (14) de la pièce (2). Un ou des ressorts (15) sont tendus entre les deux casquettes (11) et (12), le point bas du ressort étant fixé à la casquette (12), celle-ci étant mobile par glissement sur le support (14), ou entre la casquette mobile basse (12) et un point fixe mais ajustable situé dans le corps (2) à l'autre extrémité haute du ou des ressorts, dont l'effet est de rapprocher l'une et l'autre casquettes pour pincer l'appareil amovible ou susdit dispositif électronique ou électrique qu'elles doivent maintenir. Le point fixe haut dudit ressort dans le corps (2), est transférale de haut en bas dans l'oblong ou canal pratiqué dans la pièce (14) (Figure 1) ; il permet de sertir l'appareil à écran ou les susdits dispositifs suivant leur hauteur. La tension de ce ou ces ressorts est ainsi ajustable de manière à exercer une force de pincement suffisante par une tension égale du ou des ressorts, de façon à ne pas le ou les fatiguer, quelle que soit la dimension de l'appareil ou des susdits dispositifs.

Pour ce qui concerne l'attache au rétroviseur (R), la partie (1) comprend un crochet bas ou semelle fixe ou casquette (16) pour son appui sur le bord inférieur du rétroviseur. Cette semelle fixe, mais dont la longueur est variable suivant la Figure 8, est à la perpendiculaire des murs de la plaque (17), avec une échancrure pour contourner l'attache du rétroviseur au pare-brise, qui comporte également des glissières pour des coulisses (18) terminées par des crochets (19) qui font face au crochet appelé aussi semelle ou casquette (16). Des ressorts (20) tendent à rapprocher les crochets (19), de la casquette (16). Comme décrit précédemment, la tension des ressorts (20) de maintien sur le haut du rétroviseur est ajustable. Ainsi, le support selon l'invention peut-il être adapté à tous les rétroviseurs dont ceux qui sont supportés par un bras arrière de rotule au pare brise fixé sur la tranche haute du rétroviseur.

Ces dispositions constructives ne sont données qu'à titre non exhaustif.

C'est ainsi que la Figure 5 illustre des moyens préférés, constitués de maillons successifs (23c, 24c), de type de bracelet métallique de montre, qui épousent toutes les formes de rétroviseur pour leur fixation au rétroviseur (R) d'un véhicule. On retrouve sur cette Figure la plupart des éléments et organes décrits ci-dessus le dernier maillon étant fixé au pied de cette attache (23d, 24d) pénétrant les glissières ou puits (17a , 17b) de la plaque (17) .

Les glissières ou puits de la plaque (17) sont référencées (17a et 17b) sont orientés perpendiculairement à la semelle appelée aussi casquette (16) perpendiculaire à la plaque (17), qui constitue le crochet fixe bas décrit(e) ci-dessus. Les bras (34) comportent une glissière avec un rebord de retenue du rétroviseur (16a ou 35) qui permet de varier la distance de ce rebord par rapport à la plaque (17). Cette distance est réglable par des oblongs (32), et fixée par des vis et des boutons (31) immobilisant les oblongs (32) pour avancer ou reculer par l'intermédiaire des oblongs, puis fixer le rebord (16a) ou (35) à la bonne distance, pour prendre en compte plusieurs épaisseurs de rétroviseurs.

Une échancrure (17c) permet le logement de l'attache du rétroviseur au pare brise du véhicule.

La fixation du rétroviseur s'opère à l'aide de sept moyens différents selon la nature du rétroviseur rencontré, et le choix de l'utilisateur.

Le premier de ces moyens (Figure 1) est constitué de crochets (19 reliés par des ressorts (18) à des points fixes de la pièce (17), permettant à ces crochets de coulisser dans la pièce (17) pour retenir le haut du rétroviseur en le contraignant sur la casquette basse (16).

Le deuxième de ces moyens (Figure 2) est constitué par une rotule de la pièce (17) s'insérant dans la pièce 2.

Le troisième de ces moyens (Figure 4) est constitué par une rotule (9a) intégrée dans le rétroviseur (R), avec un bras de cette rotule pour suspendre la partie (2) de l'invention.

Le quatrième de ces moyens (Figure 3) est constitué d'un étrier (21) qui possède deux jambes (21a et 21b), qui forment la coulisse, pouvant être glissées dans les glissières ou puits (17a et 17b) . Le fond de l'étrier, qui passe derrière le rétroviseur, est ainsi suspendu et calé à l'axe de rotule de l'attache de ce dernier au pare brise , à proximité de la paroi arrière du rétroviseur. L'étrier (21) peut être articulé par deux charnières (30). Différents types de crochets (29) d'étrier existent par la longueur de leur bras horizontal pour s'adapter à des rétroviseurs d 'épaisseur différente ou par la longueur de leurs bras verticaux pour s'adapter à la hauteur de l'axe de rotule de l'attache du rétroviseur au pare brise, par rapport au bas du rétroviseur.

Le cinquième de ces moyens (Figure 7) est constitué d'un étrier (21b) faisant un angle par rapport aux jambes et des crochets de type (23 et 24), (21a, 21b)qui forment la coulisse, pour être glissées dans les glissières ou puits (17a et 17b) pour s'arrimer sur le bord haut du rétroviseur. On prévoit plusieurs dimensions de la partie horizontale de l'étrier et des crochets (29, soit donc un jeu d'étriers à angle.

Le sixième de ces moyens (Figure 3 à gauche) est constitué d' un jeu de crochets à angle pour s'adapter à différentes épaisseurs de rétroviseurs. Le jeu (22) de deux crochets (23 et 24), éventuellement reliés par une traverse (22a) démontable. Chaque crochet est donc en forme de L avec une branche longue (23a, 24a) qui forme la coulisse à loger dans la glissière (17a, 17b) correspondante et une branche courte (23b, 24b), de longueur variable correspondant à l'épaisseur des rétroviseurs, qui vient coiffer le bord supérieur du rétroviseur, comme les crochets (19) des figures précédentes.

Les jambes de chaque crochet ou étrier étant constituées d'une partie plate (23a, 24a 21a et 21b)avec deux rebords ou murs en U creux (non représentés), tendant à solidifier les jambes, celles-ci pénètrent les glissières ou puits (17a,17b), qui eux-mêmes comportent à l'intérieur des protubérances rectangulaires (non représentées), formant un mur en U avec une saillie parallépipédique dans les glissières ou puits, s'adaptant aux creux en U des jambes formés par leur partie plate et leurs murs, contribuant ainsi à l'immobilisation provoquée par le serrage de la vis (27) du cavalier de blocage 26. Les parties plates de ces jambes sont grainées avec des picots, de sorte à ce que les 2 extrémités du cavalier aussi grainées, pénétrant la plaque (17), immobilisent bien par leur serrage les dites jambes.

Dans le cas où le rétroviseur comporte un axe de rotule et liaison au pare brise ou au plafond du véhicule situé sur la tranche haute du rétroviseur, les crochets (22 et 23) sont conformés dans leur partie (23 b et 24 b) pour épouser cet axe par un contournement ou une liaison (22a) entre les parties (23 b et 24 b), de sorte à entourer et solidifier le pied de l'axe de rotule. Il en est de même pour l'étrier à angle (29) en L qui peut contourner par une échancrure dans la partie horizontale (29) l'axe de rotule de liaison au pare brise.

L'étrier et les crochets sont retenus dans les glissières par un cavalier de blocage (26)dont les branches (26a, 26b), par la manœuvre d'une vis (27, sont rapprochées ou éloignées des coulisses logées dans les glissières, au travers de la plaque (17) pour les pincer dans celles-ci ou les libérer. Le cavalier (26) est unique. Il est ainsi possible de bloquer les branches (26 a et 26 b) du cavalier (26) par l'intermédiaire de la vis de serrage (27 pénétrant par vissage dans la plaque (17) , contre les jambes (21a et 21b de l'étrier (21),ou de l'étrier à au moins un crochet (29), ou sur les jambes verticales des crochets (22 et 23), ou des jambes (23d, 24d) reliées à des maillons, immobilisant ainsi le rétroviseur quelque soit sa forme en éloignant ou en rapprochant par ailleurs la semelle ou casquette (16) du bord inférieur du rétroviseur et de maintenir un contact ferme entre cette semelle ou casquette et le bord inférieur du rétroviseur lorsque le cavalier (26) est serré et agit par ses branches (26a et 26b) au contact des pieds (21a, 21b, 23 a, 24 a, 23d, 24 d) au contact des jambes de l'étrier ou des crochets, ces jambes étant pourvues de surfaces rugueuses.

Les surfaces des supports (11, 12 et 16), les murs (17 a et 17 b) de la pièce (17) une partie des étriers (21) et des crochets (22 et 23)comportent des collages de caoutchouc ou de mousse pour interdire les glissements.

Le septième de ces moyens, non représenté, est constitué d'un aimant fixé sur le support (14), le GPS ou le téléphone ayant reçu une pastille aimantable ou disposant d'une pièce métallique collée au dos de l'appareil portable.

Le huitième de ces moyens (Figure 5), ces huitième moyens étant les préférés de l'invention, sont constitués d'un organe d'accrochage formé d'un jeu de deux crochets semblables en forme de L dont la plus grande jambe forme ladite coulisse coopérant avec les glissières ou puits et dont la longueur tant de la partie horizontale sur le haut du rétroviseur que de la partie verticale dans le dos du rétroviseur est constituée de maillons en plastique avec un bon coefficient de solidité ou en matière similaire, successifs, à charnière, les liant les uns aux autres, comme sont constitués des bracelets généralement métalliques des montres vendues dans le commerce, ceux-ci étant reliés par des axes horizontaux enfilés dans les charnons de chacun des maillons, le premier maillon étant en forme de crochet sur le rebord haut du rétroviseur, le dernier étant relié à une jambe faisant coulisse dans les glissières ou puits de la plaque (17).

On notera que les parties constitutives de ces moyens à maillons, ne comportent que trois pièces à fabriquer, le premier maillon à crochet, la jambe faisant coulisse dans les glissières ou puits, et un nombre répétitif de maillons identiques, au milieu de ces deux extrémités, qui ne nécessite qu'un moule d'injection. Le prix de revient de cette version de crochets est donc le plus bas.

On notera que ces maillons en plastique peuvent être remplacés par des maillons en caoutchouc et un que ces moyens à maillons peuvent être remplacés ou par une bande de caoutchouc partant du crochet du devant du rétroviseur jusqu'au puits ou par une bande dont la longueur est ajustée et fixée par un bouton de serrage que l'on trouve habituellement comme lacets de serrage de vêtements ou de sacs.

On notera que ces maillons sont reliés entre eux par des goupilles de différents types, goupilles coniques, splint pins, K locking pins,Spiral sping cotter, etc.

L'adaptation à des rétroviseurs de taille différente est obtenue par le retrait ou l'ajout d'un maillon ou de deux ou trois maillons.

Cet avantage remarquable de cette version de crochets à maillons, est que elle s'adapte à tout rétroviseur quelque soit son épaisseur et ses formes, en épousant en plus la totalité de sa configuration, de la partie haute au-dessus de la glace du rétroviseur et de la partie arrière du rétroviseur. Cette version, vraiment universelle, répond à la meilleure approche technique et au meilleur prix de revient.

On remarque une disposition importante de l'invention, qui est que l'ensemble de maintien de l'attache au rétroviseur est sensiblement centré, quelques soient les modes d'attache (crochets à ressort, étriers à jambes, étriers à angles et crochets à jambes ou crochets en maillons de bracelet de montre), et contourne l'axe de rotule du rétroviseur au pare-brise, et que de ce fait le support du téléphone ou du GPS ou des susdits dispositifs électroniques ou électriques ne dérègle pas le positionnement du rétroviseur dans sa fonction de rétrovision.

On remarque aussi que la caractéristique du pliage de la partie basse de maintien du téléphone ou du GPS ou des susdits dispositifs sous le rétroviseur en cas de choc est une sécurité très importante.

Ainsi on comprend que si le support selon l'invention est présenté à la vente, par exemple, avec un jeu d'étriers (21), et/ou un jeu d'étriers à angles et crochets (21b), et/ou un jeu (22) de crochets (23), (24) différents les uns des autres par la longueur de leur petite branche, et/ou des crochets à maillons (31)de type bracelet de montre épousant très parfaitement la forme de tous les rétroviseurs, on offre à l'acquéreur la possibilité de mettre en place le support sur la très grande majorité si non la totalité des rétroviseurs existants.

On notera que dans une variante de réalisation, c'est la partie (2) du support composé de deux éléments (11) et (12) qui sont indexés l'un par rapport à l'autre autour d'un axe sensiblement vertical du support (14). Ces éléments (11) et (12) peuvent être percés (28 a, 28 b) pour permettre la mise en place de câbles de connexion entre le téléphone ou le GPS ou entre les susdits dispositifs et la batterie solaire ou le chargeur celle-ci étant retenue derrière le téléphone ou le GPS ou autre susdit dispositif par serrage textile auto agrippant ou autre moyen.

On notera enfin que dans la variante où est retourné à 180° le deuxième moyen vers le pare-brise, on étend l'application de l'attache au maintien d'un radar antibrouillard, ou d'un émetteur récepteur de télépéage, ou d'un émetteur récepteur anti collision, ou d'un détecteur d'endormissement, ou d'un appareil à vision nocturne, ou d'un projecteur etc.

Le présent support d'attache d'un appareil portable à un rétroviseur de véhicule est industrialisable à un coût concurrentiel des attaches existantes, mais il a des particularités que n'ont aucune de ces attaches, c'est que le présent support est adapté à toutes dimensions de GPS et toutes dimensions de rétroviseur, de mobiles, mêmes dotés d'un blue tooth, dont les conducteurs ne se séparent jamais, parce qu'ils sont leur liaison permanente avec leur travail et avec leurs familles ; que ce support est une solution visible et audible idéale pour les GPS et les mobiles qu'on laisse souvent dans la poche, sur le siège voisin, sur le sol de la voiture ou dans un sac, ce qui est préjudiciable à la sécurité ; en cas d'accident elle se plie sous le rétroviseur pour ne pas heurter le front du conducteur ; en se pliant l'extrémité de son support ne touche pas le pare brise des petites ou des grandes voitures ; elle n'obstrue pas la vision devant de la route à suivre, en raison de ce qu'elle est attachée à un point haut, celui du rétroviseur fixé au haut du pare brise ; elle permet à la main du conducteur de régler aisément le bouton jour/nuit en raison de sa position proche du conducteur ; elle n'est pas non plus dans le champ d'explosion des airbags, qui évitent les rétroviseurs dans le même axe protégé ; elle est proche de la partie transparente du pare brise aux émissions du téléphone ou du GPS, améliorant leur réception ; elle est solidement attachée au contraire des ventouses ou des aérateurs ;elle propose différents modes d'attache au rétroviseur, ce qui permet de répondre à toutes les catégories, dimensions ou conformations des rétroviseurs ; le pied support du deuxième moyen portant le Mobile ou le GPS ou les autres appareils électroniques ou électriques peut être proposé de sorte à recevoir verticalement le plus grand des mobiles, en raison de son grand empattement du support , le Samsung Note 2, de 15 cm de haut, ou en raison de son empattement court, dans une autre version du support, pour insérer tout GPS ou tout mobile horizontalement ; étant proche du rétroviseur l'attache réduit les points d'attention du conducteur de trois points à deux points dimensions ou contre : la route et le duo écran/rétro, au lieu de la route à suivre, l'action à entreprendre sur écran et la rétro vision, ce qui fait que le conducteur ne commet plus d'embardées ; le conducteur en conduisant est renseigné, sans bouger la tête, il tourne seulement les yeux, sur la route à suivre dans le cas où il utilise la fonction GPS et il voit en même temps les véhicules qui sont derrière lui ou le doublent ; disposant d'une batterie solaire ou autre le câble de l'allume cigare est supprimé alors qu'il est habituellement un embarras pour les appareils des attaches habituelles ; elle permet une bonne écoute des messages et une bonne vision des instructions étant plus proche de la vue et de l'ouïe du conducteur qu'un appareil attaché sur le pare-brise, plus éloigné ; le deuxième moyen d'attache du mobile ou du GPS ou de dispositifs généralement électroniques ou électriques peut être retourné à 180° sur son axe sensiblement horizontal constituant une charnière inversable pour que ces dispositifs soient face au pare-brise ce qui augmente de façon très importante ses applications, comme il a été dit, par exemple l'insertion d'un radar antibrouillard. L'attache est en quelque sorte universelle, sécuritaire et multi-applications dans l'habitacle.

## Revendications

1. Support d'attache au rétroviseur intérieur (R) en matière plastique ou en métal léger pour appareil portatif possédant un écran d'affichage de téléphone ou de GPS ou pour des dispositifs généralement électroniques, électriques ou autres,
comportant une première extrémité pourvue d'un premier moyen (16,17), pour sa fixation à un rétroviseur intérieur (R) de véhicule et une seconde extrémité pourvue d'un second moyen (11, 12) pour recevoir et maintenir ledit appareil en dessous du rétroviseur de façon centrée par rapport au rétroviseur (R), dans lequel le premier moyen (17)comporte une semelle ou casquette (16) à rebord (16a) pour être appliquée contre le bord inférieur du rétroviseur, **caractérisé en ce que** la semelle ou casquette(16)comporte au moins une glissière ou un puits(17a,17b)et un organe d'accrochage à maillons(3), le support d'attache étant conformé pour coopérer avec une autre partie du rétroviseur, son bord supérieur, de part et d'autre de l'axe de rotule du rétroviseur au pare brise, par un organe d'accrochage constitué de deux crochets (19,105), de ressorts (20) à des points fixes de la pièce (17)de maintien de ces crochets , ou de bandes de caoutchouc et de plusieurs maillons articulés par des charnières (23c, 24c, 31), de type bracelet de montre en métal,et de jambes (18, 106) constituant une coulisse dans des puits (17a), l'organe d'accrochage étant commencé par un maillon en forme de crochet, pour s'arrimer sur le bord supérieur du rétroviseur, puis par des maillons en succession, variables en nombre, des jambes et des ressorts pour épouser et contraindre la forme du rétroviseur, les jambes (18, 106) logées en coulisse dans le premier moyen (17),en forme de glissières ou puits de l'organe d'accrochage étant fixées avec des moyens de blocage (26) en forme de cavalier à bouton de serrage (27) introduisant deux branches (26a, 26b) à enfoncement dans des trous prévus dans le premier moyen (17) pour immobiliser les coulisses dans les glissières ou puits, les maillons (100) comportant chacun à l'avant deux tétons (102) et à l'arrière deux trous (101)réalisés dans des ailes du maillon,le premier maillon de la chaîne de maillons ayant une forme de crochet (19,105) pour s'arrimer sur le bord haut du rétroviseur, puis par des maillons reliés entre eux par des goupilles de différents types, pour épouser et contraindre la forme du rétroviseur, le dernier maillon coopérant avec les jambes destinées à s'insérer dans les puits correspondants ou glissières (17a, 17b),
la distance du bord supérieur du rétroviseur (R) par rapport à la semelle ou casquette (16), constituée par l'ensemble du premier maillon à crochet, des maillons en succession et du pied de jambe extérieur à la glissière ou puits, étant réglable par l'enfoncement du pied de jambe dans la glissière ou puits, dans une direction perpendiculaire à la semelle ou casquette, pour assurer, après montage, un contact permanent de la semelle ou casquette(16) avec le bord inférieur du rétroviseur, contraignant et immobilisant ainsi le rétroviseur (R) entre les crochets (31) et la semelle ou casquette (16).

2. Support d'attache, selon la revendication 1, au rétroviseur intérieur (R) pour appareil portatif possédant un écran d'affichage de téléphone ou de GPS ou pour des dispositifs généralement électroniques, électriques ou autres,
**caractérisé en ce que** l'organe d'accrochage est un étrier plan ou arceau (21), un étrier ou arceau en L (29) articulé par des charnières (30), pour s'accrocher à l'axe de rotule de l'attache du rétroviseur au pare brise et dont chaque extrémité forme une jambe (21a, 21 b) qui constitue une coulisse (21 a, 21 b) apte à être logée dans la glissière ou puits (17a), des moyens de blocage par un cavalier à bouton de serrage(26) étant prévus pour immobiliser la coulisse dans la glissière ou puits

3. Support selon l'une des revendications précédentes,
**caractérisé en ce qu'**il comporte deux parties (1, 2), l'une portant le premier moyen et l'autre le second moyen, ces parties étant mobiles l'une par rapport à l'autre grâce à une zone de liaison (5) déformable qui permet, lorsque le support est fixé au rétroviseur (R) par une articulation freinée sous le rétroviseur (R),suivant un axe 5 sensiblement horizontal entre le premier moyen et le deuxième moyen, un débattement de la seconde partie (2) par rapport à la première (1) vers l'avant du véhicule.

4. Support selon la revendication 1 à 3,
**caractérisé en ce que** cette articulation est à axe (5) sensiblement horizontal, qui permet en repoussant le second moyen d' atteindre le bouton jour/nuit du rétroviseur, et **en ce que** le premier moyen présente une large échancrure ou espace d'accès au bouton jour/nuit, et **en ce que** le deuxième moyen est capable par son articulation d'être retourné à 180 ° en sens contraire, de sorte que le support est orienté dans la direction du pare brise ,tels que un radar anti brouillard, un appareil de vision nocturne, un appareil de projection sur pare brise, un appareil de télépéage, un appareil anti collision , un projecteur , etc.

5. Support selon la revendication 1 à 4,
**caractérisé en ce que** cette articulation est à rotule (9) intégrée au corps du rétroviseur ou au second moyen pour recevoir et maintenir l'appareil portatif en dessous du rétroviseur.

6. Support selon l'une des revendications précédentes
**caractérisé en ce qu'**une des parties (1, 2) est formée de deux éléments (1) et (2) indexables l'un par rapport à l'autre autour d'un axe sensiblement vertical lorsque le support est attelé à un rétroviseur (R) **en ce que** les moyens assurant cette indexation sont une lumière oblongue (3) ménagée dans l'élément (1b) de support du rétroviseur (R)traversée par une vis (4) implantée dans l'élément (1a), les deux éléments portant l'un sur l'autre par une surface cylindrique qui définit l'axe vertical susdit, et permet l'orientation du support du mobile ou du GPS ou des dispositifs généralement électroniques, électriques ou autres, vers le conducteur.

7. Support selon l'une quelconque des revendications précédentes,
**caractérisé en ce qu'**une partie (2) porte une batterie solaire ou chargeur ou batterie à contact ou induction, entre ses casquettes (11) et (12) capable d'alimenter l'appareil de téléphone ou GPS ou autre dispositif électronique ou électrique ou autre.

8. Support selon la revendication 1
**caractérisée en ce que** un rebord (16,16a, 34, 35) de la semelle ou casquette sur laquelle le rétroviseur (R)s'appuie, est réglable en distance
par rapport à la plaque (17) par des glissières constituées dans des bras (16) de la plaque (17), freiné et immobilisé par des vis glissantes dans des oblongs (32) situés dans la plaque (16) et des boutons de serrage du rebord (16a,34, 35)pour prendre en compte plusieurs épaisseurs de rétroviseurs.

9. Support selon la revendication 1
**caractérisé en ce que** le support (2) incorpore un aimant, le GPS ou le téléphone ayant reçu une pastille aimantable ou disposant d'une pièce métallique collée au dos de l'appareil portable.

10. Support selon la revendication 1,
**caractérisé en ce que** les maillons en plastique peuvent être remplacés par des maillons en caoutchouc ou par une bande de caoutchouc partant du crochet au devant du rétroviseur jusqu'au puits (17a, 17b)ou jusqu'à la jambe (23d, 24d) entrant dans ce puits.

## Patentansprüche

1. Halterung aus Kunststoff- oder Leichtmetall zur Befestigung eines tragbaren Gerätes mit Telefon- oder GPS-Display, oder ganz allgemein elektronischer, elektrischer oder anderer Geräte an einem Innenrückspiegel (R),
**dadurch gekennzeichnet, dass** sie ein erstes Ende besitzt, das mit ersten Mitteln (16, 17) für ihre Befestigung an einem Fahrzeug-Innenrückspiegel (R) versehen ist, sowie ein zweites Ende, das mit zweiten Mitteln (11, 12) für die Aufnahme und die in Bezug zum Rückspiegel (R) mittige Halterung des besagten Geräts unter dem Rückspiegel versehen ist, wobei das erste Mittel (17) eine Sohle oder Kappe (16) mit umgebogenem Rand (16a) aufweist, zum Anbringen gegen den unteren Rand des Rückspiegels, die Sohle oder Kappe (16) mindestens eine Führschiene oder einen Schacht (17a, 17b)aufweist, sowie ein aus Gliedern bestehendes Befestigungselement(3),
**dadurch gekennzeichnet, dass** sie so geformt ist, dass sie mit einem anderen Teil des Rückspiegels, seinem oberen Rand, beiderseits der Achse des Kugelgelenks zur Befestigung des Rückspiegels an der Windschutzscheibe mit einem Einhaksystem zusammenwirkt, bestehend aus zwei Haken (19, 105), Federn (20) an festen Punkten des Teils (17), der diese Haken hält, oder aus Gummistreifen und mehreren durch Scharniere (23c) gelenkig verbundenen Gliedern (24c, 31) vom Typ Uhrarmband aus Metall,
sowie aus Beinen (18, 106), die ein Gleitstück in den Schächten (17a) bilden, wobei das Einhaksystem mit einem hakenförmigen Glied beginnt, das am oberen Rand des Rückspiegels zu befestigen ist, gefolgt von aufeinanderfolgenden, in der Anzahl variablen Gliedern, Beinen und Federn, um sich der Form des Rückspiegels anzupassen und diesen zu einklemmen,
**dadurch gekennzeichnet, dass** das erste Mittel zu seiner Befestigung an einem Innenrückspiegel aus Haken (19, 105) besteht, die durch Federn (1:8) mit festen Punkten des Teils
(17a) verbunden sind, um die Oberseite des Spiegels zu halten, indem sie ihn an gegen den unteren Halter(16) klemmen,
**dadurch gekennzeichnet, dass** die im ersten Mittel (17) in Form von Führschienen oder Schächten des Hakenelements als Gleitstück eingeschobenen Beine (18, 106) durch Verriegelungsmittel (26) in Form eines Reiters mit Spannknopf (27) befestigt sind, welcher zwei Stifte (26a, 26b) in die im ersten Mittel (17) vorgesehenen Löcher einführt, um die Gleitstücke in den Führschienen oder Schächten zu blockieren,
**dadurch gekennzeichnet, dass** die Glieder (100) jeweils vorne zwei Zapfen (102) und hinten zwei Löcher (101) aufweisen, die in die Flügel des Gliedes eingearbeitet sind, wobei das erste Glied der Gliederkette als Haken (19, 105) für die Befestigung an der Oberkante des Rückspiegels geformt ist, gefolgt von Gliedern, die durch Stifte unterschiedlicher Art miteinander verbunden sind, um sich an die Form des Spiegels anzupassen und ihn zu umfassen, wobei das letzte Glied mit den Beinen zusammenwirkt, die in die entsprechenden Schächte oder Führschienen eingeführt werden sollen (17a, 17b),
**dadurch gekennzeichnet, dass** der Abstand der Oberkante des Spiegels (R) von der Sohle oder Kappe (16), bestehend aus dem ersten Hakenglied, den aufeinanderfolgenden Gliedern und dem außerhalb der Führschiene oder des Schachts befindlichen Ende des Bein verstellt werden kann, indem das Ende des Beins in die Führschiene oder den Schacht eingeführt wird, und zwar senkrecht zur Sohle oder Kappe, um nach der Montage einen dauerhaften Kontakt der Sohle oder Kappe (16) mit der Unterkante des Rückspiegels zu gewährleisten, wodurch der Rückspiegel (R) zwischen den Haken (31) und der Sohle oder Kappe(16) eingeklemmt und festgehalten wird.

2. Halterung zur Befestigung an einem Innenrückspiegel (R) für ein tragbares Gerät mit einem Telefon- oder GPS-Display oder allgemein für elektronische, elektrische oder andere Geräte nach Anspruch 1,
**dadurch gekennzeichnet, dass** das Befestigungselement ein flacher Bügel oder ein Bogen (21), oder ein durch Scharniere(30) gelenkig verbundener L-förmiger Bügel oder Bogen (29)ist, zum Einhaken an der Kugelgelenkachse der Befestigung des Rückspiegels an der Windschutzscheibe, dessen Enden jeweils ein Bein(21a, 21b) bilden, welches als Gleitstück (21a, 21b) in die Führschiene oder den Schacht (17a) aufgenommen werden kann, wobei Mittel zur Verriegelung mittels eines Reiters mit einem Spannknopf (26) vorgesehen sind, um das Gleitstück in der Führschiene oder dem Schacht zu blockieren.

3. Halterung nach einem der vorstehenden Ansprüche, **dadurch gekennzeichnet, dass** sie zwei Teile (1, 2) umfasst, von denen der eine das erste Mittel und der andere das zweite Mittel trägt, wobei diese Teile jeweils zueinander beweglich sind mittels einer verformbaren Verbindung (5), welche entlang einer im wesentlichen horizontalen Achse 5 zwischen dem ersten Mittel und dem zweiten Mittel einen Bewegungsspielraum des zweiten Teils (2) im Verhältnis zum ersten (1) in Richtung der Vorderseite des Fahrzeugs ermöglicht, wenn die Halterung an dem Rückspiegel (R) durch eine gebremste Verbindung unter dem Rückspiegel (R) befestigt ist.

4. Halterung nach den Ansprüchen 1 bis 3,
**dadurch gekennzeichnet, dass** dieses Gelenk eine im wesentlichen horizontale Achse (5) aufweist, die es ermöglicht, den Tag/Nacht-Knopf des Rückspiegels durch Zurückschieben des zweiten Mittels zu erreichen, dass das erste Mittel einen breiten Ausschnitt oder Zugangsraum für den Tag/Nacht-Knopf aufweist, und dass das zweite Mittel durch sein Gelenk um 180° in die entgegengesetzte Richtung gedreht werden kann, so dass die Halterung in Richtung der Windschutzscheibe ausgerichtet ist, wie z. B. ein Nebelradar, ein Nachtsichtgerät, ein Windschutzscheibenprojektionsgerät, ein elektronisches Mauterhebungsgerät, ein Antikollisionsgerät, ein Scheinwerfer usw.,

5. Halterung nach den Ansprüchen 1 bis 4,
**dadurch gekennzeichnet, dass** dieses Gelenk ein in den Körper des Rückspiegels oder in das zweite Mittel zur Aufnahme und Halterung des tragbaren Geräts unter dem Rückspiegel integriertes Kugelgelenk (9) aufweist.

6. Halterung nach einem der oben genannten Ansprüche,
**dadurch gekennzeichnet, dass** eines der Teile (1, 2) aus zwei Elementen (1) und (2) besteht, die um eine im Wesentlichen vertikale Achse zueinander indexiert werden können, wenn die "Halterung mit einem Rückspiegel (R) gekoppelt ist, dass das Mittel, welches diese Indexierung gewährleisten, aus einem länglichen Schlitz (3) in dem Element (1b) besteht, das den Rückspiegel (R) trägt, durch welchen eine in das Element (1a) eingesetzt Schraube (4) verläuft, wobei die beiden Elemente sich gegenseitig über eine zylindrische Fläche stützen, welche die oben genannte vertikale Achse definiert, und die Ausrichtung des Mobil- oder GPS-Trägers oder der allgemein elektronischen, elektrischen oder anderen Geräte zu dem Fahrer hin ermöglicht.

7. Halterung nach einem der oben genannten Ansprüche,
**dadurch gekennzeichnet, dass** ein Teil (2) zwischen den Haltern (11) und (12) eine Solarbatterie oder ein Ladegerät oder eine Kontakt- oder Induktionsbatterie trägt, die das Telefon oder das GPS oder ein anderes elektronisches oder elektrisches Gerät mit Strom versorgen kann.

8. Halterung nach Anspruch 1,
**dadurch gekennzeichnet, dass** ein Rand (16, 16a, 34, 35) der Sohle oder Kappe, auf welcher der Spiegel (R) sich stütet, im Abstand verstellbar ist in Bezug auf die Platte (17), und zwar mittels in den Armen (16) der Platte (17) gebildeten Führschienen, gebremst und gehalten mittels Schrauben, die entlang von in der Platte (16) angeordneten Langlöchern (32) gleiten, und am Rand (16a, 34, 35) angebrachten Klemmknöpfen, um mehrere Spiegeldicken zu berücksichtigen.

9. Halterung nach Anspruch 1
**dadurch gekennzeichnet, dass** die Halterung (2) einen Magneten enthält, wobei das GPS oder Telefon einen magnetisierbaren Chip erhalten hat oder ein Metallteil auf die Rückseite des tragbaren Geräts geklebt ist.

10. Halterung nach Anspruch 1,
**dadurch gekennzeichnet, dass** die Kunststoffglieder durch Gummiglieder oder durch einen Gummistreifen ersetzt werden können, der sich vom Haken vor dem Spiegel bis zum Schacht (17a, 17b) oder bis zu dem in diesen Schaft eingeschobenen Bein (23d, 24d) erstreckt.

## Claims

1. Plastic or light metal attachment support to an interior rear view mirror (R) for a portable device with a phone or GPS display screen or for generally electronic, electrical or other devices,
**characterized in that** it has a first part with a first means (16,17), for its attachment to an interior rearview mirror (R) of a vehicle and a second part equipped with a second means (11, 12) to receive and maintain the said device below the rear-view mirror centered in relation to the rearview mirror (R), in which the first means (17) has a sole or cap (16) with a rim (16a) to be applied against the lower edge of the rearview mirror, and **in that** the sole or cap(16) has at least one slide or well (17a,17b) and uses a chain-linking piece with links(3),
**characterized in that** it is consistent to cooperate with another part of the rearview mirror, its upper edge, situated on either side of the ball joint axis of the rearview mirror to the windshield, by an hanging organ being constituted by two hooks (19, 105), of springs (20) fixed at fixed points to the part (17) to maintain the hooks, or of rubber bands, and of several links articulated by hinges (23c, 24c, 31) of metal watch bracelet type, and of legs (18, 106) constituting a sliding in the wells (17a), the hanging organ being started by a link shaped as a hook in order to constrain the upper edge of the rear mirror, then by links in succession , variable in number, by legs and by springs in order to marry and constrain the rear mirror shape,
**characterized in that** the first means for attaching to an interior rear mirror consists of hooks (19, 105) connected by springs (18) to fixed points of the piece (17a) to hold the top of the rear view mirror by constraining it on the low cap (16) ,
**characterized in that** the legs (18, 106) located as slides in the first part (17) in the form of slidings or wells of the hanging organ are fixed with locking means of them (26) in the shape of a rider with a tightening button (27) introducing two branches (26a, 26b) inserted into holes provided in the part (17) for immobilizing the slides in the slides or wells,
**characterized in that** the links (100) have each two nipples (102) at the front and two holes (101) in the wings of the link at the rear, the first link of the chain of links having a hook shape (19,105) to stow on the top edge of the rear-view mirror, then by links connected by pins of different types, to marry and constrain the shape of the rearview mirror, the last links cooperating with the legs intended to slide into the corresponding wells or slides (17a, 17b),
**characterized in that** the distance from the upper edge of the rear-view mirror (R) to the sole or cap (16), is constituted of the whole of the first hook link, of successive links and of the leg foot outside to the slide or well, is adjustable by the leg foot sinking into the slide or well, in a direction perpendicular to the sole or cap, in order to ensure, after assembly, permanent contact of the sole or cap (16) with the lower edge of the rear mirror, constraining and immobilizing the mirror (R) between the hooks (31) and the sole or cap (16),

2. Attachment support, according to claim 1, to the interior rear mirror (R) for a portable device having a telephone or GPS display screen or for generally electronic, electrical or other devices, **characterized in that** the hanging attachment is a flat bracket or hoop (21), an L-shaped bracket or hoop (29) articulated by hinges (30), to hang on the ball joint axis of the mirror attachment to the windshield so that each end of which forms a leg (21a, 21b) which constitutes a slide (21a, 21b) capable of being housed in the slide or well (17a),with means for locking by a piece in a rider shape with a tightening button (26) provided to immobilize the slide in the slide or well,

3. Support according to one of the preceding claims, **characterized in that** it comprises two parts (1, 2), one carrying the first means and the other the second means, these parts being movable relative to one another thanks to a deformable connection zone (5) which allows, when the support is fixed to the rear view mirror (R) by an articulation braked under the rear view mirror (R), along a substantially horizontal axis (5) between the first means and the second means, a movement of the second part (2) relative to the first part (1) towards the front of the vehicle.

4. Support according to claim 1 to 3, **characterized in that** this articulation is in an axis (5) substantially horizontal, which allows by pushing the second means to reach the day / night button of the mirror, and **in that** the first means has a large notch or space for access to the day/night button, and **in that** the second means is capable, by its articulation, of being turned 180 ° in the opposite direction, so that the support is oriented in the direction of the windshield, such as an anti-fog radar, a night vision device, a windshield projection device, a toll device, an anti-collision device, a projector, etc.

5. Support according to claim 1 to 4, **characterized in that** this articulation is with a ball joint (9) integrated in the body of the mirror or in the second means for receiving and holding the portable device below the mirror.

6. Support according to one of the preceding claims **characterized in that** one of the parts (1, 2) is formed by two elements (1) and (2), indexable with respect to each other around a substantially vertical axis when the support is coupled to a rear view mirror (R) **in that** the means ensuring this indexing are an oblong opening (3) formed in the element (1b) of the support of the mirror (R) crossed by a screw (4) installed in the element (1a), the two elements bearing one on the other by a cylindrical surface which defines the above vertical axis, and allows the orientation of the support of the mobile or GPS or generally electronic, electrical or other devices, towards the driver.

7. Support according to any one of the preceding claims, **characterized in that** a part (2) carries a solar battery or a charger or a contact or an induction battery, between its caps (11) and (12) capable of supplying the telephone or GPS device or other electronic or electrical or other device.

8. Support according to claim 1 **characterized in that** a flange (16,16a, 34, 35) of the sole or cap on which the mirror (R) is supported, is adjustable in distance relative to the plate (17) by slides formed in arms (16) of the plate (17), immobilized by sliding screws in oblongs (32) located in the plate (16) and tightening knobs of the rim (16a, 34, 35) to take into account several thicknesses of rear mirrors.

9. Support according to claim 1 **characterized in that** the support (2) incorporates a magnet, the GPS or the telephone having received a magnetizable patch or having a metallic piece glued to the back of the portable device.

10. Support according to claim 1, **characterized in that** the plastic links can be replaced by rubber links or by a rubber band extending from the hook in front of the rear mirror to the well (17a, 17b) or to the leg (23d, 24d) entering the well.
